Europäisches Patentamt

(19) European Patent Office

Office européen des brevets

(11) Numéro de publication : **0 126 016**
**B1**

(12) **FASCICULE DE BREVET EUROPÉEN**

(45) Date de publication du fascicule du brevet :
04.03.87

(21) Numéro de dépôt : 84440020.0

(22) Date de dépôt : 11.05.84

(51) Int. Cl.⁴ : **B 62 D 35/00**

(54) **Dispositif stabilisateur pour remorques.**

(30) Priorité : 13.05.83 FR 8308108

(43) Date de publication de la demande :
21.11.84 Bulletin 84/47

(45) Mention de la délivrance du brevet :
04.03.87 Bulletin 87/10

(84) Etats contractants désignés :
BE CH DE GB IT LI LU NL

(56) Documents cités :
FR-A- 1 472 450
GB-A- 1 315 182
US-A- 2 146 297
US-A- 4 440 433

(73) Titulaire : **S.A.R.L. MECANETUDE**
**134, rue de Lille**
**F-59200 Tourcoing (nord) (FR)**

(72) Inventeur : **Plantefeve, Fernand**
**11, rue des Accacias**
**F-59760 Neuville-en-Ferrain (FR)**

(74) Mandataire : **Ecrepont, Robert**
**Cabinet Ecrepont 12 Place Simon Vollant (Porte de Paris)**
**F-59800 Lille (FR)**

EP 0 126 016 B1

Jouve, 18, rue St-Denis, 75001 Paris, France

## Description

La présente invention est relative à un dispositif stabilisateur pour une remorque, telle une caravane qui est notamment destinée au véhicule automobile tractant cette remorque.

Ce dispositif stabilisateur pour remorques trouvera son application dans le domaine de l'automobile pour faciliter la conduite d'un tel attelage.

Lorsqu'un véhicule tracte une remorque telle une caravane, il y a formation de remous d'air néfastes à l'avancement de la remorque.

En effet, des flux d'air tourbillonnent dans l'espace formé entre le véhicule et la remorque.

De ce fait, la remorque est soumise au tangage et retransmet au véhicule la tractant des efforts qui perturbent la conduite du véhicule.

En outre, le véhicule doit fournir une énergie supplémentaire pour tirer la remorque ce qui est dû à l'effort supplémentaire nécessaire pour vaincre la résistance à la pénétration dans l'air de la remorque.

On connaît des dispositifs stabilisateurs pour remorques qui diminuent les efforts créés par la remorque et retransmis au véhicule par l'attache de la remorque.

Ces dispositifs sont intégrés dans l'attache de la remorque. Ils permettent d'atténuer les effets des perturbations mais n'en suppriment pas leur cause. De plus, le véhicule consomme une énergie supplémentaire due à la prise au vent.

Notamment d'après le brevet FR-A-1 472 450, on connaît un autre dispositif, appliqué à un semi-remorque présentant une face avant qui en roulant s'oppose à sa pénétration dans l'air, ce dispositif stabilisateur qui est destiné à être monté de manière définitive sur le véhicule tractant la remorque comprend :

un déflecteur horizontal fixé sur le toit du véhicule et,

des moyens pour dévier latéralement les filets d'air et qui sont constitués par des déflecteurs dits latéraux, situés sur les côtés du véhicule auquel ils sont accrochés par des moyens de fixation inférieurs et des moyens de fixation supérieurs, ces derniers étant situés au niveau du toit du véhicule.

Ces déflecteurs fixés à demeure sur le véhicule ou difficilement démontables ne peuvent convenir pour des véhicules ne tractant qu'occasionnellement une remorque.

En outre, ils ne sont pas réglables.

Le dispositif stabilisateur pour remorque de la présente invention a pour but de pallier à ces inconvénients.

Son principal but est donc de faciliter l'amovibilité et le réglage du dispositif.

D'autres buts et avantages de la présente invention apparaîtront au cours de la description qui va suivre, qui n'est donnée qu'à titre indicatif et qui n'a pas pour but de la limiter.

Selon l'invention, ce dispositif est caractérisé en ce que :

les moyens de fixation inférieurs de chacun des déflecteurs latéraux consistent en un crochet, solidaire de la partie inférieure du déflecteur correspondant et qui prend appui sur la carrosserie du véhicule au niveau du passage de la roue arrière,

tandis que les moyens de fixation supérieurs des déflecteurs latéraux, qui reçoivent la partie supérieure de ces déflecteurs et leurs moyens d'immobilisation consistent en une barre portetout qui est fixée à des pattes-attaches situées de chaque côté du véhicule.

L'invention sera mieux comprise si l'on se réfère à la description ci-dessous, ainsi qu'aux dessins en annexe qui en font partie intégrante.

La figure 1 représente une vue de côté du véhicule tractant une remorque, équipé du dispositif stabilisateur de la présente invention.

La figure 2 représente une vue de dessus du véhicule tractant une remorque, équipé du dispositif stabilisateur selon l'invention.

La figure 3 représente un détail du dispositif stabilisateur réalisé dans un mode préférentiel montrant les moyens de fixation supérieurs à la carrosserie du véhicule.

La figure 4 représente un détail du dispositif stabilisateur réalisé dans un mode préférentiel montrant les moyens de fixation inférieurs à la carrosserie du véhicule.

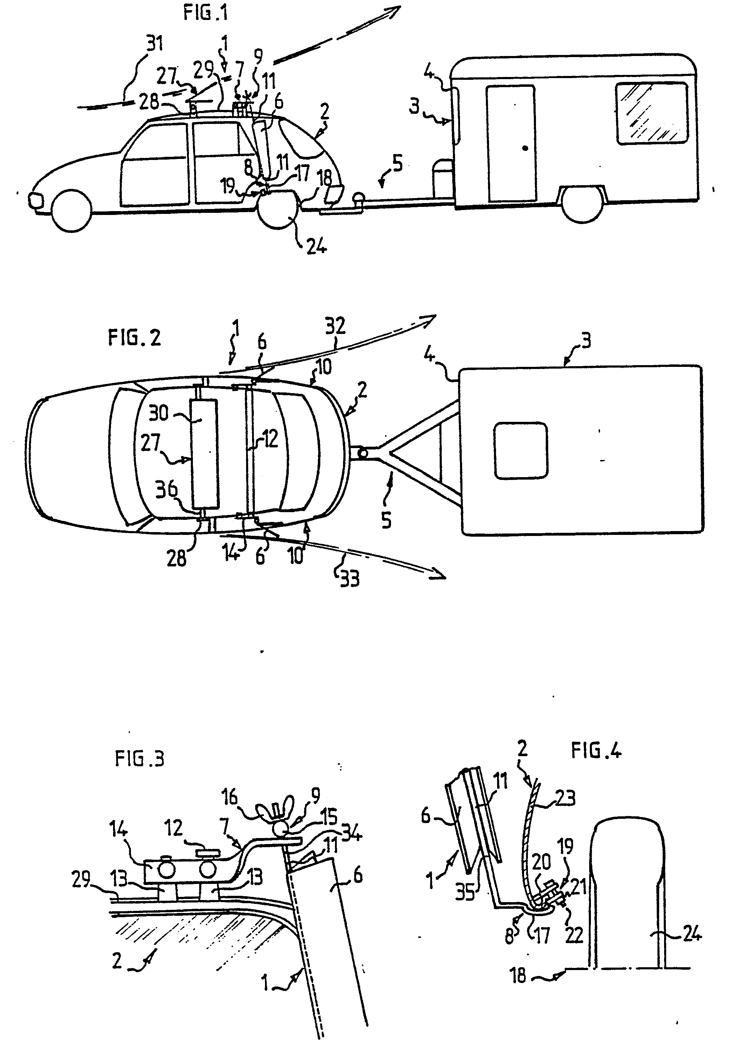

Le dispositif stabilisateur pour remorque 1 est notamment destiné à être installé sur des véhicules 2 tractant une remorque telle une caravane 3 comme le montrent les figures 1 et 2. La remorque tractée 3 présente une surface plane 4, constituant la face avant de la remorque, qui s'oppose à la pénétration dans l'air de la remorque 3. De plus, le déplacement d'air généré par le véhicule en roulant donne naissance à des flux d'air qui viennent frapper la surface 4 de la remorque 3 et tourbillonner dans l'espace 5 formé entre le véhicule 2 et la remorque 3.

Ces remous d'air tourbillonnant provoquent des efforts sur la remorque 3 qui ont tendance à la faire tanguer et qui se répercutent sur le véhicule 2.

Le dispositif stabilisateur pour remorque 1 comporte des moyens 6 et 27 pour dévier les flux d'air en les écartant de la remorque 3 suivant le sens des flèches 31, 32 et 33 des figures 1 et 2. Ces moyens 6 et 27 déviant les flux d'air suppriment les remous subsistant sur la remorque tractée 3 et créent un vide d'air partiel qui aspire la remorque 3. Ils sont disposés transversalement autour de la zone arrière du véhicule 2.

Les moyens 27 pour dévier les flux d'air générés par le dessus du véhicule 2 sont fixés sur le toit 29 du véhicule 2. Ils se présentent sous la forme d'un déflecteur horizontal 30.

Ces déflecteurs horizontaux 30 sont constitués par des pièces en forme de V réalisées en métal ou en matière plastique dont la pointe est dirigée vers l'avant du véhicule. Ils sont fixés sur le toit 29 du véhicule 2 au moyen d'une barre porte-tout 36 et des attaches 28 de chaque côté du véhicule prenant soit dans la gouttière du toit, soit sur le haut de la carrosserie.

L'inclinaison et le positionnement des déflecteurs horizontaux 30 constituant les moyens 27 pour dévier les flux d'air sont réglables de manière à ce que les flux d'air circulant au-dessus du toit 29 du véhicule 2 soient déviés dans le sens de la flèche 31 ceci afin de les écarter de la remorque 3 pour qu'ils ne viennent plus frapper la surface 4 de ladite remorque et de ce fait créer des tourbillons néfastes.

Les moyens 6 pour dévier les flux d'air générés sur les côtés latéraux 10 du véhicule 2 sont fixés sur ces côtés latéraux 10 et se présentent sous la forme de déflecteurs latéraux.

Ces déflecteurs latéraux constituant les moyens 6 pour dévier les flux d'air latéraux sont réalisés en métal, en matière plastique rigide ou en matière plastique souple gonflable. Ils ont la forme d'un V dont la pointe est dirigée vers l'avant du véhicule 2.

Les moyens 6 pour dévier les flux d'air sont placés de chaque côté latéral 10 à l'arrière du véhicule 2 et sont accrochés à la carrosserie par des moyens de fixation supérieurs 7 et des moyens de fixation inférieurs 8.

Les moyens de fixation supérieurs 7 représentés à la figure 3 sont constitués par une barre porte-tout 12 comportant à chaque extrémité deux pattes-attaches 13 s'accrochant au toit 29 de la carrosserie, soit dans la gouttière de toit ou soit dans le haut du bâti des portes arrière.

De chaque côté sur les pattes-attaches 13 est fixé un plat 14 servant de siège à une rotule d'orientation 15 et permettant de recevoir la partie supérieure du déflecteur constituant les moyens 6 pour dévier les flux d'air.

Les moyens de fixation inférieurs 8 tels que représentés à la figure 4 sont constitués par un crochet 17 prenant appui dans le passage 18 de la roue arrière 24 du véhicule 2. Les moyens de fixation inférieurs 8 comportent également une butée 19 fixée sur la carrosserie 23 du passage 18 de la roue arrière 24.

Cette butée 19 est constituée par deux petits morceaux de plat qui, placés de part et d'autre des deux côtés de la carrosserie 23, sont réunis par un moyen de serrage 22 pour pincer ladite carrosserie.

Entre les moyens de fixation supérieurs 7 et les moyens de fixation inférieurs 8 on vient placer le déflecteur latéral constituant les moyens 6 pour dévier les flux d'air. Ledit déflecteur est fixé sur une barre ou un axe 11 dont l'extrémité inférieure 35 est solidaire du crochet 17, et dont l'extrémité supérieure 34 comporte un filetage de manière à pouvoir recevoir les moyens d'immobilisation 16 constitués par un écrou à ailettes par exemple.

Pour installer sur le véhicule 2 les moyens 6 pour dévier les flux d'air on procède de la manière suivante :

on fixe la butée 19 sur la carrosserie 23 du passage arrière 18 de la roue 24,

on place à côté de cette butée 19 le crochet 17 prenant prise dans le passage 18 de la roue arrière 24,

on fixe la partie supérieure 34 de l'axe 11 supportant le déflecteur par les moyens de fixation supérieurs 7 en particulier par le plat 14, la rotule 15 et les moyens d'immobilisation 16,

on vient serrer les moyens d'immobilisation 16 de la manière à créer une tension dans l'axe 11.

La butée 19 placée en avant du crochet d'amarrage 17 tel que représenté à la figure 1 évite audit crochet 17 de bouger lors du serrage des moyens d'immobilisation 16. Les moyens de fixation supérieurs 7 comportent des moyens 9 pour régler l'inclinaison des moyens 6 pour dévier les flux d'air. En effet, suivant la position relative des deux moyens de fixation 7 et 8 on obtient une inclinaison différente des déflecteurs constituant les moyens 6 pour dévier les flux d'air. La rotule d'orientation 15 permet d'effectuer un serrage correct des moyens d'immobilisation 16 desdits moyens pour dévier les flux d'air.

De cette manière on place de chaque côté du véhicule ces déflecteurs latéraux constituant les moyens 6 pour dévier les flux d'air latéraux.

L'inclinaison et le positionnement des moyens 6 pour dévier les flux d'air latéraux s'effectuent de telle manière à ce que les flux d'air générés s'écartent de la remorque 3 suivant les flèches 32 et 33 telles que représentées à la figure 2.

Grâce au dispositif stabilisateur pour remorque 1, on a donc la possibilité de dévier tous les flux d'air générés et de les écarter de la remorque 3 pour qu'ils ne viennent pas frapper la surface 4 de ladite remorque 3. De cette manière, on supprime les remous d'air tourbillonnant créés dans l'espace 5 formé entre le véhicule 2 et la remorque 3 et on crée un vide d'air partiel qui aspire la remorque 3. Le véhicule 2 n'est donc plus soumis aux perturbations de conduite causées par le tangage de la remorque, de plus, l'effort nécessaire pour tracter la remorque étant moindre, on effectuera des économies de combustible.

Le mode de réalisation qui vient d'être décrit n'est donné qu'à titre indicatif et d'autres mises en œuvre de la présente invention, à la portée de l'Homme de l'Art, pourraient être adoptées sans pour autant sortir du cadre de celle-ci.

**Revendications**

1. Dispositif stabilisateur pour une remorque amovible (3) telle une caravane, présentant une face avant (4) qui en roulant s'oppose à sa pénétration dans l'air, lequel dispositif stabilisateur est destiné à être monté de manière amovible sur le véhicule (2) tractant la remorque (3) et comprend :

un déflecteur horizontal (30) fixé sur le toit (29) du véhicule, et

des moyens (6) pour dévier latéralement les filets d'air et qui sont constitués par des déflecteurs dits latéraux situés sur les côtés (10) du véhicule (2) auquel ils sont accrochés par des moyens de fixation inférieurs (8) et des moyens de fixation supérieurs (7), ces derniers étant situés au niveau du toit (29) du véhicule (2), ce dispositif étant caractérisé en ce que :

les moyens de fixation inférieurs de chacun des déflecteurs latéraux consistent en un crochet (17), solidaire de la partie inférieure du déflecteur correspondant (6) et qui prend appui sur la carrosserie (23) du véhicule (2) au niveau du passage (18) de la roue arrière (24),

tandis que les moyens de fixation supérieurs des déflecteurs latéraux, qui reçoivent la partie supérieure de ces déflecteurs (6) et leurs moyens d'immobilisation (16), consistent en une barre porte-tout (12) qui est fixée à des pattes-attaches (13) situées de chaque côté du véhicule.

2. Dispositif stabilisateur selon la revendication 1 caractérisé par le fait que les moyens de fixation inférieurs (8) comprennent en outre une butée indépendante (19) fixée sur la carrosserie (23) du véhicule au niveau du passage (18) de la roue arrière (24) à la carrosserie du véhicule, à côté de laquelle est engagé le crochet (17) de la partie inférieure du déflecteur latéral (6) et contre laquelle ledit crochet (17) s'appuie lors de l'immobilisation du déflecteur (6).

3. Dispositif selon la revendication 2 caractérisé par le fait que la butée (19) est constituée par deux petits morceaux de plat situés de part et d'autre de la carrosserie au niveau du passage (18) de la roue arrière (24), réunis par un moyen de serrage (22) pour pincer ladite carrosserie.

4. Dispositif selon la revendication 1 caractérisé par le fait que la patte-attache (13) est fixée au toit du véhicule qui est prolongé par un plat (14) servant de siège à une rotule d'orientation (15), l'ensemble étant traversé par un filetage de l'extrémité supérieure (34) du déflecteur (6) qui rejoint ensuite les moyens d'immobilisation (16) tels un écrou à ailettes.

5. Dispositif selon la revendication 4 caractérisé par le fait que sur chaque côté du véhicule le plat (14) est fixé sur la patte-attache.

6. Dispositif selon l'une quelconque des revendications 1 à 5 caractérisé par le fait que chaque déflecteur latéral (6) comprend un axe (11) supportant ledit déflecteur (6) au moyen de son extrémité inférieure (35) qui présente le crochet (17) et de son extrémité supérieure (34) qui présente le filetage destiné à recevoir des moyens d'immobilisation (16) tels un écrou à ailettes.

7. Dispositif selon l'une quelconque des revendications 1 à 6 caractérisé par le fait que les déflecteurs latéraux (6) comprennent des moyens (9) pour régler leur inclinaison.

## Claims

1. A stabilising device for a movable trailer (3) such as a caravan, having a front face (4) which during movement is exposed to impact with the air, which stabilising device is to be movably mounted on the vehicle (2) pulling the trailer (3) and comprises
a horizontal deflector (30) mounted on the roof (29) of the vehicle, and
means (6) for laterally deflecting air streams and which are comprised of lateral deflectors disposed on the sides (10) of the vehicle (2) to which they are attached by lower (8) and upper (7) fixing means, the latter being disposed level with the roof (29) of the vehicle (2),
the device being characterised in that
the lower securing means of each of the lateral deflectors comprise a hook (17), rigid with the lower portion of the respective deflector (6) and which rests on the body (23) of the vehicle (2) level with the housing (18) of the rear wheel (24),
while the upper securing means of the lateral deflectors, which receive the upper portion of the said deflectors (6) and their immobilisation means (16), comprise a universal bearing member (12) which is secured to the brackets (13) arranged on each side of the vehicle.

2. A stabilising device according to claim 1 characterised in that the lower securing means (8) further comprise an independent catch (19) secured to the body (23) of the vehicle level with the housing (18) of the rear wheel (24) on the body, adjacent which the hook (17) of the lower portion of the lateral deflector (6) is engaged and against which the said hook (17) bears when the deflector (6) is immobilised.

3. A device according to claim 2, characterised in that the catch (19) is comprised of two small flat members disposed on either side of the body level with the housing (18) of the rear wheel (24), connected by a locking means (22) to grip the said body.

4. A device according to claim 1, characterised in that the bracket (13) is secured to the roof of the vehicle which is extended by a flat member (14) acting as a seat for a ball and socket joint (15), the unit being traversed by screw threading from the upper end (34) of the deflector (6) which then connects the immobilisation means (16) such as a wing nut.

5. A device according to claim 4, characterised in that on each side of the vehicle the flat member (14) is secured to the bracket.

6. A device according to any one of claims 1 to 5, characterised in that each lateral deflector (6) comprises a rod (11) supporting the said deflector (6) by its lower end (35) which has the hook (17) and by its upper end (34) which has the screw threading for receiving the immobilisation means (16) such as a wing nut.

7. A device according to any one of claims 1 to 6, characterised in that the lateral deflectors (6) comprise means (9) for adjusting their angle of inclination.

## Patentansprüche

1. Stabilisierungsvorrichtung für einen abnehmbaren Hänger (3), zum Beispiel für einen Caravan, dessen Vorderseite (4) während der Fahrt dem Luftstrom entgegenwirkt, wobei die Stabilisierungsvorrichtung zur lösbaren Montage an dem den Hänger (3) ziehenden Fahrzeug (2) bestimmt is und

einen auf dem Dach (29) des Fahrzeugs befestigten horizontalen Deflektor (30) und

Elemente (6) zur seitlichen Ableitung der Luftströme aufweist, wobei diese Elemente (6) durch seitliche Deflektoren gebildet sind, die sich an den Seiten (10) des Fahrzeugs befinden, an welchen sie durch untere Befestigungselemente (8) und obere Befestigungselemente (7) eingehängt sind, welch letztere sich in Höhe des Daches (29) des Fahrzeugs (2) befinden, dadurch gekennzeichnet, daß

die unteren Befestigungselemente jedes seitlichen Deflektors bestehen aus eine Haken (17), der mit dem unteren Bereich des betreffenden Deflektors (6) einstückig ist und sich in Höhe des Radkastens (8) des Hinterrads (24) an der Karosserie (23) des Fahrzeugs (2) abstützt,

während die oberen Befestigungselemente der seitlichen Deflektoren, die den oberen Bereich der Deflektoren (6) und deren Festlegemittel (16) aufnehmen, aus einem Allesträgerbalken (12) bestehen, der an Befestigungseisen (13) befestigt ist, die beidseits des Fahrzeugs angeordnet sind.

2. Stabilisierungsvorrichtung nach Anspruch 1, dadurch gekennzeichnet, daß die unteren Befestigungselemente (8) darüber hinaus ein unabhängiges Axiallager (19) aufweist, das an der Karosserie (23) des Fahrzeugs in Höhe des Radkastens (18) des Hinterrads (24) befestigt ist und an dessen Seite der Haken (17) des unteren Bereichs des seitlichen Deflektors (6) eingehängt ist und an welchem sich der Haken (17) während der Festlegung des Deflektors (6) abstützt.

3. Stabilisierungsvorrichtung nach Anspruch 2, dadurch gekennzeichnet, daß das Axiallager (19) gebildet ist durch zwei kleine Plattenteile, die beidseits der Karosserie in Höhe des Radkastens (18) des Hinterrads (24) angeordnet und zum Festklemmen der Karosserie durch Schraubelemente (22) miteinander verbunden sind.

4. Stabilisierungsvorrichtung nach Anspruch 1, dadurch gekennzeichnet, daß das Befestigungseisen (13) an dem Fahrzeugdach befestigt ist, welches durch eine Platte (14) verlängert ist, die als Sitz für ein Orientierungskugelgelenk (15) dient, wobei das Gesamte von einem Gewinde der oberen Extremität (34) des Deflektors (6) durchgriffen ist, das die Verbindung mit dem Festlegeelement (16) , zum Beispiel einer Flügelmutter, wiederherstellt.

5. Stabilisierungsvorrichtung nach Anspruch 4, dadurch gekennzeichnet, daß die Platte (14) auf jeder Seite des Fahrzeugs an dem Befestigungseisen festgelegt ist.

6. Stabilisierungsvorrichtung nach einem der Ansprüche 1 bis 5, dadurch gekennzeichnet, daß jeder seitliche Deflektor (6) eine Achse (11) aufweist, die den Deflektor (6) mit ihrem unteren Ende (35) stützt, welches den Haken (17) zeigt, und mit ihrem oberen Ende (34), welches das Gewinde zeigt, das zur Aufnahme des Festlegeelements (16), zum Beispiel einer Flügelmutter, bestimmt ist.

7. Stabilisierungsvorrichtung nach einem der Ansprüche 1 bis 6, dadurch gekennzeichnet, daß die seitlichen Deflektoren (6) Mittel (9) zur Einstellung deren Neigung aufweisen.

FIG.1

0 126 016

FIG.2

FIG.3

FIG.4